# DEMANDE DE BREVET EUROPEEN

(11) **EP 2 259 024 A1**
(43) Date de publication de la demande: **08.12.2010**
(21) Numéro de dépôt: 09305512.7
(22) Date de dépôt: 04.06.2009
(51) Int. Cl.: G01C 21/20, G01C 17/28, H04M 1/725, H04W 4/02

(54) **Procédé et dispositif pour la détermination d'une direction vers un lieu prédéfini**

(71) Demandeur: Gemalto SA, 92190 Meudon (FR)
(72) Inventeur: Caruana, Jean-Paul, 13009, MARSEILLE (FR)

(57) **Abrégé**

La présente invention concerne un procédé pour la détermination d'une direction (7t, 7c) vers un lieu prédéfini, ledit procédé comportant les étapes suivantes :
a) collecte d'information de localisation (I, J) d'un dispositif portable (9, 10, 20)
b) collecte ou création d'information d'orientation (V) relativement à un pôle ou repère de référence,
c) détermination de ladite direction (7t, 7v) à partir des informations ci-dessus et information de positionnement d'un lieu prédéfini ;

L'invention se distingue en ce que l'information de localisation est déterminée ou délivrée à partir de coordonnées géographiques (I, J) d'un élément terrestre (CELL) d'un réseau de communication téléphonique cellulaire ou au moins d'un terminal de communication fixe (21).

L'invention concerne également le dispositif correspondant.

## Description

La présente invention concerne un procédé et un dispositif pour la détermination d'une direction vers un lieu prédéfini.

Plus particulièrement, l'invention propose une méthode et sa mise en oeuvre pour indiquer au musulman la direction et le sens vers lequel il doit s'orienter pour effectuer sa prière quotidienne.

Pour le musulman, l'heure de chaque prière est déterminée en fonction des heures de lever et de coucher du soleil à l'endroit où se trouve le pratiquant et donc en fonction de la latitude, de la longitude et de l'altitude de cet endroit. En outre, un des piliers de la prière consiste dans l'orientation vers la Qibla. Cette orientation est obligatoire pour le pratiquant quel que soit le lieu où ce dernier se trouve.

Les dispositifs connus de détermination de la position de la Qibla utilisés à ce jour nécessitent l'usage d'une boussole, d'une carte du monde et de la connaissance du lieu géographique où se trouve le pratiquant. A notre époque où les voyages, les escales et les déplacements sont de plus en plus fréquents, ce lieu géographique n'est pas toujours connu du pratiquant.

Par ailleurs des systèmes plus sophistiqués font appel à des méthodes de géo-localisation par satellites couplées à une boussole. Ces systèmes présentent l'inconvénient de ne pas fonctionner en environnement intérieur ou fermé, là ou les réceptions de type satellite ne fonctionnent pas.

La présente invention résout ce problème et offre au pratiquant un moyen automatique de s'orienter à l'heure de la prière, vers la Qibla sans même connaitre l'endroit où lui-même se trouve.

Il a déjà été proposé des dispositifs permettant d'indiquer une direction à une personne et/ou une localisation. En particulier, la demande de brevet GB2444623-A décrit notamment un dispositif portable comportant un GPS (Global positioning system) et un affichage qui indique la distance et la direction de telle manière qu'un utilisateur peut localiser un emplacement enregistré ou un point d'origine. Dans un mode de réalisation le dispositif comprend une boussole électronique et une mémoire de stockage. Le dispositif peut être configuré pour identifier le nord magnétique et pour employer une table de correction selon son endroit pour déterminer la direction de la Mecque. Ce dispositif présente l'inconvénient de ne pas fonctionner à l'intérieur de bâtiments.

D'autres dispositifs permettent d'indiquer une direction en calculant deux positions successives à l'aide d'un calcul de différentes positions d'un téléphone mobile en déplacement, ces positions étant communiquées ensuite au mobile qui peut ainsi déterminer une orientation. Cette autre catégorie de dispositif d'orientation ne peut fonctionner sans déplacements du porteur.

L'invention a notamment pour objectif de résoudre les inconvénients précités.

L'invention a donc pour premier objectif de proposer un dispositif permettant d'indiquer en temps réel, à l'intérieur de bâtiments, la direction de la Mecque.

Un autre objectif est de pouvoir proposer à des utilisateurs une application d'orientation, éventuellement optionnelle, qui soit facilement intégrable, facile à utiliser et déployable rapidement à moindre frais.

Un autre objectif est de proposer des services additionnels à des personnes ayant des besoins d'orientation ou adaptés au lieu d'intérêt d'un utilisateur.

Le principe de l'invention consiste, dans un mode préféré de réalisation, à intégrer dans une carte ou module d'identification d'abonné (SIM ou USIM) des capteurs magnétiques sensibles au champ magnétique terrestre. Par exemple, des capteurs magnéto résistifs seraient intégrés au moins deux capteurs étant nécessaires pour déterminer la position du nord géographique.

L'orientation dans un mode de mise en oeuvre s'obtient par couplage avec un termina dont on connaît la position géographique.

L'invention a donc pour objet un procédé pour la détermination d'une direction vers un lieu prédéfini, ledit procédé comportant les étapes suivantes :
a) collecte d'information de localisation d'un dispositif portable
b) collecte ou création d'information d'orientation relativement à un pôle ou repère de référence,
c) détermination de ladite direction à partir des informations ci-dessus et information de positionnement du lieu prédéfini,

Le dispositif se distingue en ce que l'information de localisation est déterminée ou délivrée à partir de coordonnées géographiques d'un élément terrestre d'un réseau de communication téléphonique cellulaire ou au moins un terminal de communication fixe.

Selon d'autres caractéristiques du procédé :
- tout ou partie des étapes a-c) s'effectue ou est déclenché par un module associé ou intégré au dispositif portable ;
- la collecte ou création d'information d'orientation relativement à un pôle ou repère de référence s'effectue dans ledit module ;
- ledit module comprend un module d'identification d'abonné (SIM) ou une carte à circuits intégrés ;

Grâce à ces dispositions, il est aisé de déployer facilement une fonction d'orientation par le biais d'un téléphone mobile et via notamment une carte SIM adaptée selon l'invention.

Avantageusement, le procédé comprend une étape d'apprentissage de l'orientation de la carte ou module par rapport à un terminal, ladite étape d'apprentissage permettant de compenser un décalage d'orientation résultant d'une position du module par rapport au terminal, notamment son affichage. Cela permet de déployer les cartes ou modules quel que soit la configuration du logement de la carte dans le terminal.

En étant abonné et possesseur d'un module d'orientation (boussole), on donne une indication à l'opérateur que la SIM contient un capteur d'orientation ou que la fonctionnalité orientation est ou peut être opérationnelle ou activée.

Ainsi, tout terminal conforme au standard est susceptible de fonctionner selon l'invention juste avec une carte ou module spécifique ajouté(e).

L'invention a également pour objet un dispositif portable pour la détermination d'une direction vers un lieu prédéfini comportant:
a/ des moyens de collecte d'information de localisation,
b/ des moyens de collecte ou de création d'information d'orientation relativement à un pôle ou repère de référence,
c/ des moyens de détermination de ladite direction à partir des informations ci-dessus et d'une information de positionnement du lieu prédéfini,

Le dispositif se distingue en ce qu'il est apte à collecter ou déterminer ladite information de positionnement à partir de coordonnées géographiques d'un élément terrestre d'un réseau de communication téléphonique cellulaire ou au moins d'un terminal de communication fixe.

Selon d'autres caractéristiques, le dispositif comprend ou constitue un module, ledit module comprenant au moins tout ou partie des moyens a à b) ;

Selon d'autres caractéristiques, le dispositif comprend ou constitue un appareil de télécommunication portable ou un module électronique ou un module d'identification d'abonné (SIM).
- Le dispositif comprend au moins deux capteurs magnétiques (Hx, Hy) sensibles au champ magnétique terrestre (magnéto résistif) ;
- Avantageusement, le dispositif comprend ou met en oeuvre des moyens de déclenchement automatiques de services ou des applications associés aux lieux prédéfinis, apportant ainsi un meilleur ciblage et une valeur ajouté aux utilisateurs en rapport avec leur lieu ou centre d'intérêt.
- Il peut aussi comprendre des moyens de collecte pour collecter ou saisir des données relatives à des caps d'intérêt des abonnés afin de recevoir des services additionnels en rapport.

Ainsi, les abonnés détenteurs d'un module SIM d'orientation, peuvent se voir proposer des services en rapport avec la fonction d'orientation et/ou des lieux ou direction choisis.

Des cartes SIM spécifiques pré réglées avec des lieux d'intérêt donnent aussi une indication à l'opérateur de téléphonie mobile sur la fonctionnalité orientation et la spécificité choisie des utilisateurs.

L'invention a également pour objet un module électronique ou carte à circuit intégré comportant des moyens de connexion destinés à connecter une interface d'un terminal de communication ; Le module se distingue en ce qu'il comprend des moyens sensibles au champ magnétique terrestre. Le module constitue un module d'identification d'abonné (SIM) ou une carte à circuit intégré.

Ainsi, l'invention offre dans un module réduit tout ou partie des fonctionnalités nécessaires à une orientation. Dans un mode préféré, le module comme carte SIM coopère avec un terminal pour récupérer des informations de localisation et pour afficher la direction et avec des fonctions standardisées disponibles sans autres modifications du terminal. La SIM peut également de préférence, effectuer tous les calculs de position et même avoir une fonction de boussole électronique.

D'autres caractéristiques et avantages de l'invention ressortiront de la description qui suit, faite à titre illustratif et nullement limitatif, en se référant aux dessins ci-annexés sur lesquels:
- La figure 1 illustre le dispositif de l'invention selon un mode de réalisation;
- La figure 2 illustre un deuxième mode de réalisation du dispositif conforme à l'invention pouvant être utilisé seul ou le cas échéant dans un terminal;
- La figure 3 illustre les capteurs de champs magnétiques des moyens d'orientation mis en oeuvre par l'invention selon un mode de réalisation ;
- La figure 4 illustre le champ magnétique terrestre;
- La figure 5 illustre l'angle magnétique d'inclinaison;
- La figure 6 indique une mesure des composantes magnétiques terrestres Hx et Hy pour différents azimuts (en ordonné les valeurs mesurées par le magnétomètre);
- La figure 7 illustre des étapes du procédé conforme à un mode de mise en oeuvre de l'invention.

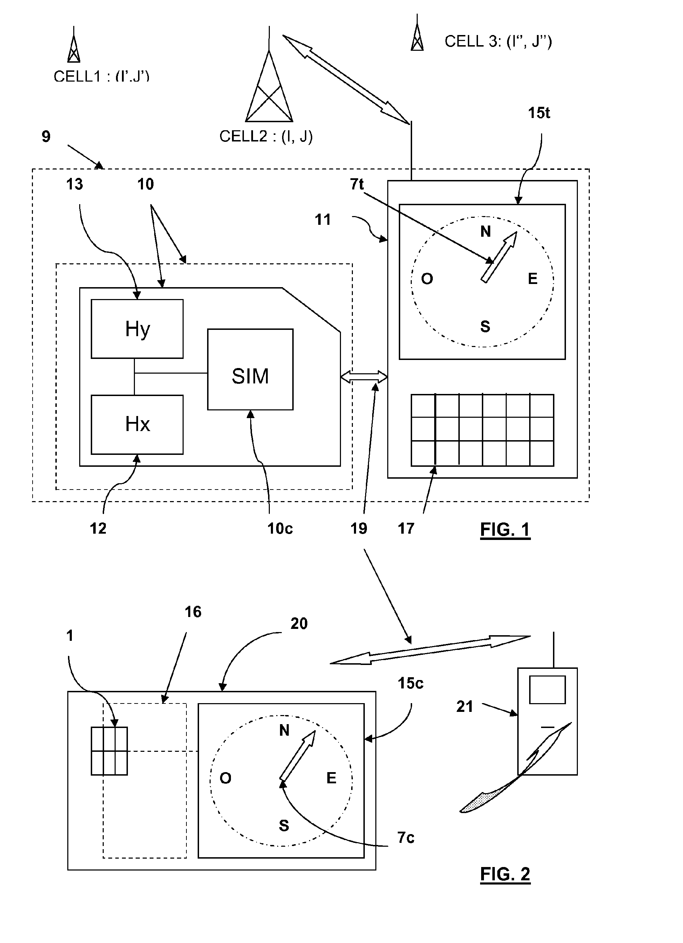

A la figure 1 , l'invention vise un objet sous la forme d'un module électronique 10 à circuits intégrés comportant des moyens de connexion 19 (ou interface de communication), destinés à connecter une interface d'un terminal de communication 11. Selon une caractéristique, cet objet comprend des moyens (Hx, Hy) sensibles au champ magnétique terrestre.

Selon un mode de réalisation préféré, la collecte ou création d'information d'orientation relativement à un pôle de référence s'effectue dans un objet ou module 10. Dans l'exemple, le module 10 comprend au moins deux capteurs magnétiques 12, 13 sensibles au champ magnétique terrestre; ils sont ici de type magnéto résistifs. Ils sont agencés dans le module de manière à capter le champ magnétique selon deux axes perpendiculaires (Hx, Hy).

De préférence, le module constitue un module d'identification d'abonné (SIM) ou une carte à microcircuit intégré. Le cas échéant le module peut être soudé à un terminal ou fixé à demeure, notamment sous forme d'un composant électronique. Le module comprend de préférence au moins un composant 10c apte à réaliser au moins les fonctionnalités d'un module d'identification d'abonné SIM (authentification pour connexion au réseau). Dans l'exemple, ce composant comprend une puce électronique.

A la figure 2, selon un autre mode de réalisation, le module est sous la forme d'une carte 20 ; il peut comprendre des moyens d'affichage 15 ou des moyens équivalents permettant de donner une indication d'une direction de référence (indicateur sonore, buzzer, générateur de bip). Le module peut comprendre par exemple un écran 15c et des moyens d'activation 16 aptes à alimenter les moyens du module en énergie (pile, bobine radiofréquence 16, etc.). Il peut comprendre également une interface 1 à contacts avec un terminal et/ou une interface radiofréquence 15. L'écran peut être à même le module notamment à la surface d'un corps de carte. Des écrans minces de type OLED ou papier électronique de préférence, sont prévus par l'invention.

Le module ou carte a l'avantage d'offrir à un porteur une fonction de boussole électronique avec éventuellement un écran intégré à la surface du module. Alternativement, le module peut émettre une alerte notamment sonore quand la direction est sensiblement bonne ou mauvaise en fonction d'un balayage opéré par l'utilisateur. L'écran peut être interactif, notamment sensitif.

Cette fonction de boussole peut être mise en oeuvre seule ou en situation de connexion avec un terminal à contacts électriques ou sans contact. Le terminal peut fournir, le cas échéant, une alimentation en énergie nécessaire aux moyens d'activation.

Ainsi, le module peut être autonome pour au moins une fonction élémentaire de boussole quand il n'est pas utilisé en rapport avec un terminal.

La fonction boussole peut être activée notamment à chaque interaction avec un terminal, borne interactive, borne de métro, terminal bancaire à contact ou radiofréquence. Ainsi un utilisateur peut être renseigné sur son orientation notamment à chaque transaction ou interaction avec un terminal. La flèche 7c indique une direction à suivre à l'instant de la transaction avec un terminal.

La flèche peut rester affichée sur des écrans rémanents ou papier électronique, l'orientation étant valable lorsque la carte sort du terminal et dans la position où elle se trouve.

Si la carte possède une source d'énergie autonome (batterie, capteur solaire...), elle peut indiquer la direction en permanence au fil des déplacements avec toutefois un calage de l'orientation sur la position ou interaction initiale avec un terminal.

On appellera par la suite indifféremment un module ou carte ou composant, voire dispositif pour désigner un élément de base de l'invention équivalent fonctionnellement.

S'agissant de boussole, nous rappelons que le champ magnétique de la terre ressemble à celui d'une simple barre aimantée comme dipôle. Ce dipôle magnétique, figure 1, a ses lignes de champ provenant d'un point près du pôle antarctique et arrivant à un point près du pôle arctique. Ces points sont appelés les pôles magnétiques. Ces lignes de champ varient à la fois en force et en direction à la surface de la terre. En Amérique du Nord les lignes de champ s'enfoncent dans le sol vers le nord avec un angle d'environ 70 degrés. Cet angle est appelé l'angle magnétique d'inclination (Æ) et est montré sur la figure 2.

La direction et la force du champ magnétique terrestre (He) peut être représenté par trois axes nommés Hx, Hy et Hz. Les valeurs des axes Hx et Hy peuvent être utilisés pour déterminer l'orientation de la boussole en référence aux pôles.

Les capteurs magnéto résistifs sont sensibles aux champs magnétiques de moins de 100 µ gauss à l'intérieur d'un domaine de ±2 gauss. Cette sensibilité peut être comparée au champ magnétique de la terre qui est d'environ 0,6 gauss (48 A/m) et aboutit à une résolution de mesure de 1 pour 6000.

Dans l'exemple, des capteurs de type magnétomètre de la société MEMSIC sous la référence MMC222 ont été utilisés.

C'est l'axe de rotation de la terre qui définit le nord et le sud géographique que nous utilisons comme repère de référence sur les cartes. Comme il y a une différence d'environ 11,5 degrés entre les pôles géographiques et les pôles magnétiques, une correction de l'azimut magnétique peut être effectuée en lui appliquant une valeur de correction. Cette valeur de correction est appelé angle de déclinaison. Une cartographie des valeurs de correction a été dressée à travers tout le globe en prenant en compte d'autres facteurs comme des grands gisements de fer et d'autres anomalies naturelles.

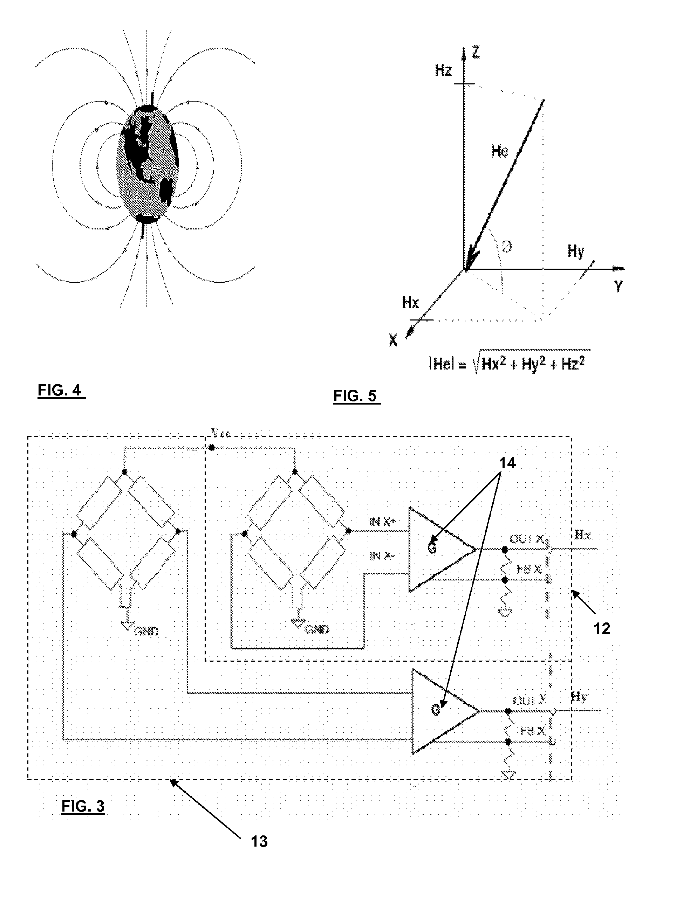

Un azimut peut être obtenu en utilisant juste les composantes Hx et Hy du champ magnétique de la terre, c'est-à-dire les directions qui sont parallèles à la surface de la terre. Ces lectures varient lorsque le capteur magnéto résistif tourne suivant un cercle comme indiqué sur la figure 3. La valeur maximale de Hx et Hy dépend de la force du champ magnétique de la terre à ce point.

L'azimut peut être obtenu (en degrés) avec les mesures de x et de y en utilisant les équations suivantes :
Azimut (y > 0) = 90 - arc tan (x/y)x 180/π
Azimut (y < 0) = 270 - arc tan (x / y) x 180 / π
Azimut (y = 0, x < 0) = 180,0
Azimut (y = 0, x > 0) = 0,0

Pour déterminer le nord géographique, il faut ajouter ou soustraire l'angle de déclinaison approprié.

Dans un mode préféré de réalisation, la carte 10 ou le composant de base (SIM ou 10c) contient de préférence tout ou partie des données ou valeurs ci-dessus en mémoire utiles à la mise en oeuvre de l'invention. Le composant de base peut comprendre un composant de type SIM doté d'un microprocesseur relié à des mémoires de travail et/ ou programme. En pratique, ce composant peut être une puce pour carte SIM destinée à identifier un abonné sur un réseau de télécommunication mobile avec des terminaux 11.

Selon le mode ci-dessus, la carte ou composant SIM intègre ou et relié à deux capteurs magnéto-résistifs 12, 13 sensibles aux champs magnétiques Hx et Hy.

Comme illustré sur la figure 3, ces deux capteurs 12, 13 délivrent des signaux conditionnés à l'aide d'amplificateurs appropriés 14 puis ces signaux amplifiés sont digitalisés au moyen de convertisseur analogique / numérique (non représenté) et des valeurs correspondantes sont transmises à un calculateur, en particulier dans l'exemple au microprocesseur de la carte SIM.

Le microprocesseur de la carte SIM effectue les calculs nécessaires pour déterminer les coordonnées du pôle magnétique terrestre par rapport à l'orientation des capteurs dans la carte SIM. Il comporte à cet effet les programmes et données correspondantes accessibles par le microprocesseur pour traitement.

Selon une caractéristique, l'invention prévoit une étape et des moyens d'apprentissage de l'orientation, permettant de compenser un décalage d'orientation de la carte par rapport au terminal. Ce décalage peut par exemple résulter d'une position du module par rapport notamment à un écran d'affichage du terminal. Cette étape s'effectue en principe lorsque la carte coopère avec un terminal.

L'orientation de la SIM (et donc des capteurs) par rapport au téléphonie ou son afficheur peuvent aussi avoir été pris en compte au préalable par le fabricant de la SIM eu égard aux terminaux dont le logement de la SIM est connu.

Un logiciel d'apprentissage peut par exemple, comprendre une étape de sélection du positionnement de la carte SIM par rapport au téléphonie ou son écran. Des valeurs préétablies d'apprentissage peuvent être sélectionnés par l'utilisateur dans un menu.

Un menu indique par exemple des positions préétablies de la carte par rapport au terminal perpendiculaire, vertical, contacts vers l'écran, etc.

Alternativement, l'apprentissage peut consister à orienteur l'appareil par rapport à une direction connue de référence telle que le nord, Est, Ouest, sud avec une boussole normale et déclencher un calage électronique sur cette direction en indiquant au module de quelle direction il s'agit. Une pression sur une touche confirme l'adéquation de l'orientation du mobile avec une orientation d'apprentissage ou étalon effectuée par une boussole, normale.

Eventuellement, pour améliore la précision et tenir compte de l'altitude, le champ Hz peut-être pris en compte par l'ajout d'un troisième capteur.

Selon un mode préféré de l'invention, le dispositif de l'invention 9 comprend ou constitue un module 10, et/ou le terminal 11. Le dispositif peut comprendre ou mettre en oeuvre tout ou partie des étapes a à b ou moyens correspondants. Le dispositif peut comprendre une boussole électronique pour déterminer les informations relatives à la direction du pôle magnétique terrestre.

A l'heure de la miniaturisation électronique et objets communicants, le dispositif 9 peut comprendre ou constituer un appareil de télécommunication portable 11 et/ou un module électronique et/ou un module d'identification d'abonné (SIM).

Le dispositif peut comprendre des moyens d'indication des coordonnées d'un lieu ou centre d'intérêt ou de sélection de lieux d'intérêts prédéfinis. Ainsi, un utilisateur peut saisir lui même des coordonnées géographiques d'un lieu selon un format déterminé. Des lieux préétablis peuvent être proposés à l'utilisateur selon une application chargée notamment dans une mémoire interne pour faire une sélection de lieu.

Le module (ou la carte) peut comprendre des moyens aptes à déterminer la position de la carte, même approximative soit par collecte d'informations, soit par mesure directe à l'aide d'un moyen de positionnement compris ou non dans le module (ou la carte). Tout moyen de positionnement connu à ce jour peut convenir.

En particulier, il est avantageux de pouvoir intégré dans une carte à circuit intégré standardisée ou non tel une carte SIM ou module, tout ou partie des moyens d'orientation ci-dessus de l'invention : moyens boussole, module de positionnement, données géographique de lieux ou de centre d'intérêt quelconque.

Grâce à l'invention, on peut déployer très rapidement et à moindre coût ce service à un abonné ou utilisateur. L'utilisateur peut déjà posséder un terminal portable (téléphone cellulaire, PDA, lecteur de carte,). Il lui suffit d'adjoindre une carte pour transformer l'appareil existant en un appareil d'orientation.

Le dispositif peut comprendre ou mettre en oeuvre également des moyens de déclenchement de services ou applications associés aux lieux d'intérêts prédéfinis.

D'autre part, le dispositif peut comprendre des moyens de collecte ou de saisie de lieux d'intérêts prédéfinis ou sélectionnés par l'utilisateur. Dans l'exemple, ces moyens peuvent comprendre un clavier 17 ou équivalent et/ou un écran 15t pour permettre de saisir des coordonnées géographiques d'un lieu ou un nom de lieu dont les coordonnées correspondantes sont connues d'un programme (ou table) pré-stocké.

L'utilisateur introduira lui même une sélection d'un lieu ou des coordonnées d'un lieu. Selon un mode de réalisation, l'invention prévoit de collecter des données géographiques via un terminal de communication qui contiendrait des données locales de localisation (par exemple, terminaux bancaires, distributeur automatiques, bornes interactives avec utilisateur, tout réseau de stations fixes de communication).

Dans un mode d'exploitation de la fonctionnalité d'indication de direction vers un lieu, l'invention prévoit également de collecter le lieu par interaction avec un utilisateur notamment par saisie ou sélection par l'utilisateur. Le lieu indiquant un intérêt de l'utilisateur pour ce dernier, l'invention prévoit de faire remonter ce centre ou lieu d'intérêt sur un serveur notamment du réseau de téléphonie mobile, et par la suite de proposer des services appropriés ou liés à ce lieu.

L'invention prévoit également de collecter une activation de la fonction d'indication de direction selon l'invention et de proposer ou déclencher à distance des opérations en réponse à cette activation qui sera détectée par le réseau.

Les opérations peuvent avoir été préalablement chargées dans la carte SIM et activées depuis la carte SIM elle-méme, lors de la mise en action de la fonction indication de direction.

Selon une variante, l'invention peut prévoir un autre indicateur de direction qu'une flèche (7c, 7t) sur un écran. L'indicateur, peut être l'émission d'un signal sonore lorsque le téléphonie est orienté dans la bonne direction du lieu d'intérêt.

Le procédé de l'invention est maintenant décrit en relation avec une utilisation illustrée à la figure 4, pour déterminer une direction vers un lieu prédéfini, en l'occurrence la Mecque.

Le procédé selon un mode préféré comporte les étapes suivantes de :
a) collecte d'information de localisation d'un dispositif portable,
b) collecte ou création d'information d'orientation relativement à un pôle ou repère de référence,
c) détermination de ladite direction à partir des informations ci-dessus et information de positionnement du lieu prédéfini.

L'étape b) sur la figure relative à l'orientation bien que présentée en seconde position doit être considérée comme étant indifféremment effectuée avant ou après l'étape a) ci-dessus.

Pour l'étape a) de collecte d'information de localisation du dispositif portable (ou de l'utilisateur), une fois le nord géographique localisé (ou de manière équivalente un pôle ou repère de référence), la carte SIM devra déterminer la position géographique du téléphone ou terminal (même approximative). La précision de l'orientation sera d'autant plus précise que le lieu d'intérêt sera éloigné de la position du téléphone,

Pour cela, l'inventeur a noté que l'application d'indication d'orientation selon l'invention peut se satisfaire d'une faible précision de positionnement nécessaire au bon déroulement de cette application. L'inventeur a également noté que la technologie GSM s'affranchit des contraintes des bâtiments pour la réception, contrairement au système GPS.

L'invention combine aussi une boussole électronique (ou moyens équivalents) à la technologie de télécommunication radiofréquence notamment géo localisation GSM du terminal en utilisant les moyens standardisés aujourd'hui de détermination de la position d'un téléphone Mobile. Le système de positionnement utilisé selon un mode de réalisation du procédé ou du dispositif, comprend avantageusement le réseau de télécommunication téléphonique GSM ou équivalent (GPRS, UMTS...) comme système de géo localisation.

Le dispositif de l'invention est apte à collecter ou déterminer l'information de positionnement via le système ci-dessus de positionnement.

La géo localisation par GSM (téléphones mobiles de deuxième génération actuellement utilisés par la majorité du public) est basée sur l'IMEI acronyme anglo-saxon de l'expression "International Mobile Equipement Identify" obtenu à partir de la carte SIM, qui est un code unique composé de 15 chiffres représentant un numéro d'identification du mobile.

Lorsqu'un utilisateur s'identifie à un réseau mobile, le numéro IMEI est transmis au système de gestion de l'opérateur afin de pouvoir l'autoriser à utiliser les différentes options disponibles. Cette démarche est complètement transparente pour l'utilisateur et se fait de manière automatique.

Suivant le type de réseau téléphone mobile, différents moyens de localisation seront utilisés par la carte SIM : La localisation du mobile va s'effectuer à travers l'adresse de la station de base BTS (acronyme anglais de Base Transceiver Station) ou une station équivalente sur laquelle il est connecté. Cette identification est appelée Cell-ID (identification de cellule ou station). Elle a pour avantage d'être très simple et peu onéreuse.

La précision de positionnement du mobile va varier de 250 mètres en zone urbaine à 10 kilomètres en zone rurale. Ce qui est largement suffisant pour l'application d'indication de la Mecque ou autre point ou lieu d'intérêt.

L'utilisation de commande proactive telle que standardisée par la norme 3GPP TS 31.111 permet à la SIM de récupérer du réseau GSM ces informations et ainsi de localiser le téléphone.

Ces informations (telles que identification d'un élément du réseau : la cellule) couplées à une table (ou équivalent) comportant en entrée notamment des références de l'élément et en sortie des coordonnées géographiques ou autres moyens équivalents, donnent à la SIM (ou module ou terminal) tous les moyens permettant de connaitre les coordonnées géographiques du téléphone.

Alternativement, des informations relatives à la position du mobile et/ou son déplacement ou direction sont déterminées par le réseau par une base adaptée au suivi de mobile. Ces informations peuvent être récupérées par le terminal et/ou la carte aux fins de l'invention.

Selon un encore un autre mode alternatif, une information de localisation peut être récupérée via le terminal au cours d'une transaction avec la carte. Cette information peut être préalablement stockée en mémoire du terminal lors de l'installation du terminal dans un lieu quelconque (station métro, quartier, ville, pays, coordonnées géographiques...). L'information peut être un identifiant à croiser avec une table de correspondance ou équivalent pré chargée dans la carte.

L'information de localisation peut être communiquée par radiofréquence ou autre moyen sans contact, notamment par le terminal.

De même, selon un autre mode de mise en oeuvre, l'utilisateur peut prélever ou introduire des données de localisation, notamment à l'aide d'un clavier sur le dispositif ou la carte. Ces indications peuvent être affichées par exemple, selon une convention ou un code général accepté, sur un appareil de communication fixe à demeure dans un lieu public. La communication peut n'être réalisée qu'entre la carte et le terminal.

Concernant l'étape c) de détermination de la direction, dans l'exemple, il s'agit de déterminer la direction de la Mecque.

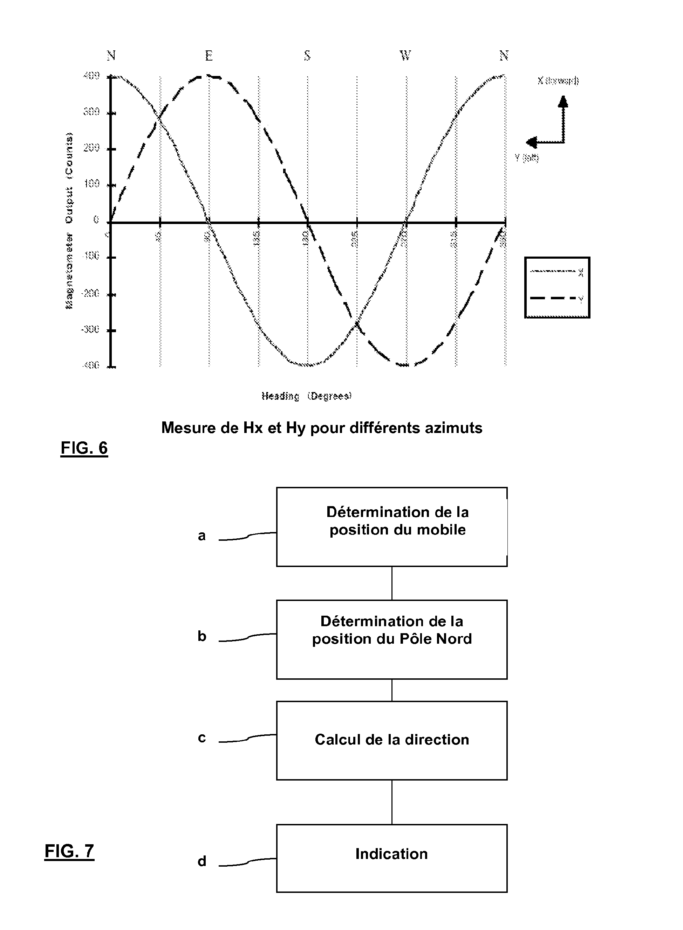

L'opération suivante à l'étape c) figure7, consiste à calculer l'angle entre la direction de la Mecque et l'axe d'orientation du téléphone et/ou de la carte. Une fois cette opération effectuée, un affichage de préférence sera effectuée sur l'écran utilisateur.

Cette opération de calcul est de préférence effectuée dans la carte SIM mais peut être effectuée par le mobile ou terminal.

Ensuite, on procéde à l'indication de la direction à l'étape d) notamment par un affichage d'une flèche 7t, 7c. Pour l'affichage, par exemple, dans l'application d'affichage de la direction de la Mecque, la carte SIM peut demander au téléphone d'afficher une flèche 7t sur l'écran du téléphone selon son orientation en mettant en oeuvre notamment des commandes proactives.

Selon une caractéristique de l'invention, tout ou partie des étapes s'effectue ou est déclenché par un module associé au dispositif portable. Dans l'exemple, toutes les étapes a-c sont réalisées dans la carte SIM mais pourraient être réalisées dans un mobile ou terminal 11.

Selon un autre exemple particulier de mise en oeuvre, l'invention concerne un procédé automatique intérieur / extérieur de détermination et d'indication d'un cap prédéfini, (direction et sens). Le procédé met en oeuvre un objet portable comprenant :
- Un modem ou dispositif d'accès au réseau de télécommunication mobile,
- Un module SIM ou USIM (Subscriber Identification Module),
- une unité de traitement à base de microprocesseur,
- Au moins deux capteurs magnétiques sensibles au champ magnétique terrestre (magnéto résistifs),
- Des moyens d'affichage et/ou d'interface avec un utilisateur
- Et un logiciel spécifique.

Le logiciel spécifique effectue les étapes suivantes :
- Détermination par l'intermédiaire d'une commande proactive des coordonnées (I, J) du lieu géographique d'où se trouve l'objet portable au moyen des informations normalisées recueillies du réseau téléphonique (MCC «acronyme anglo-saxon de Mobile Country Code », MNC « acronyme de Mobile network Code », LAC : « acronyme de Local Area Code » et Cell-ID : identifiant de la cellule CELL ou élément du réseau de télécommunication en relation avec le mobile)
- Détermination des coordonnées du pôle magnétique terrestre au moyen des capteurs magnétiques embarqués,
- Calcul par l'unité de traitement de la direction (V) et sens du cap du lieu géographique préalablement défini (La Mecque)
- Affichage de ce cap (7t, 7c) au moyen de l'interface utilisateur (15t, 15c).

## Revendications

1. Procédé pour la détermination d'une direction (7t, 7c) vers un lieu prédéfini, ledit procédé comportant les étapes suivantes :
a) collecte d'information de localisation (I, J) d'un dispositif portable (9, 10, 20)
b) collecte ou création d'information d'orientation (V) relativement à un pôle ou repère de référence,
c) détermination de ladite direction (7t, 7v) à partir des informations ci-dessus et information de positionnement d'un lieu prédéfini,
**caractérisé en ce que** l'information de localisation est déterminée ou délivrée à partir de coordonnées géographiques (I, J) d'un élément terrestre (CELL) d'un réseau de communication téléphonique cellulaire ou au moins d'un terminal de communication fixe (21).

2. Procédé selon la revendication précédente, **caractérisé en ce que** tout ou partie des étapes a-c) s'effectue ou est déclenché par un module associé ou intégré au dispositif portable.

3. Procédé selon la revendication précédente, **caractérisé en ce que** ledit module comprend un module d'identification d'abonné (SIM) ou une carte à circuits intégrés.

4. Procédé selon l'une quelconque des revendications précédentes, **caractérisé en ce que** la collecte ou création d'information d'orientation relativement à un pôle ou repère de référence s'effectue dans ledit module.

5. Procédé selon la revendication précédente, **caractérisé en ce qu'**il comprend une étape d'apprentissage de l'orientation, ladite étape d'apprentissage permettant de compenser un décalage d'orientation résultant d'une position du module par rapport au terminal.

6. Dispositif portable pour la détermination d'une direction vers un lieu prédéfini comportant:
a/ des moyens de collecte d'information de localisation,
b/ des moyens de collecte ou de création d'information d'orientation relativement à un pôle de référence,
c/ des moyens de détermination de ladite direction à partir des informations ci-dessus et d'une information de positionnement du lieu prédéfini,
**caractérisé en ce qu'**il est apte à collecter ou déterminer ladite information de positionnement à partir de coordonnées géographiques d'un élément terrestre d'un réseau de communication téléphonique cellulaire ou au moins un terminal de communication fixe.

7. Dispositif selon la revendication précédente, **caractérisé en ce qu'**il comprend ou constitue un module, ledit module comprenant au moins tout ou partie des moyens a à b).

8. Dispositif selon la revendication précédente, **caractérisé en ce que** ledit module comprend un module d'identification d'abonné (SIM).

9. Dispositif selon la revendication précédente, **caractérisé en ce que** lesdits moyens de collecte ou de création d'information comprennent au moins deux capteurs magnétiques (Hx, Hy) sensibles au champ magnétique terrestre.

10. Dispositif selon la revendication précédente, **caractérisé en ce qu'**il comprend ou constitue un appareil de télécommunication portable ou un module électronique ou un module d'identification d'abonné (SIM).

11. Dispositif selon l'une quelconque des revendications 6 à 10, **caractérisé en ce qu'**il comprend des moyens de déclenchement de services ou applications associés aux lieux prédéfinis.

12. Module électronique à circuit intégré comportant des moyens de connexion destinés à connecter une interface d'un terminal de communication, **caractérisé en ce qu'**il comprend des moyens sensibles au champ magnétique terrestre.

13. Module électronique selon la revendication précédente, **caractérisé en ce qu'**il comprend au moins deux capteurs magnétiques (Hx, Hy) sensibles au champ magnétique terrestre.

14. Module selon la revendication précédente, **caractérisé en ce qu'**il constitue un module d'identification d'abonné (SIM) ou une carte à circuit intégré.

15. Module selon la revendication précédente, **caractérisé en ce qu'**il comprend des moyens d'affichage ou d'indication d'une direction de référence.
